# EUROPEAN PATENT SPECIFICATION

(11) **EP 0 767 761 B1**
(45) Date of publication and mention of the grant of the patent: **19.04.2000**
(21) Application number: 95926329.4
(22) Date of filing: 29.06.1995
(51) Int. Cl.: C03B 19/06

(54) **SINTERED QUARTZ GLASS PRODUCTS AND METHODS FOR MAKING SAME**
GESINTERDE QUARZGLASPRODUKTE UND VERFAHREN ZUR HERSTELLUNG
PRODUITS EN VERRE DE QUARTZ FRITTES ET PROCEDES POUR LEUR FABRICATION

(30) Priority: 30.06.1994 US 269002
(43) Date of publication of application: 16.04.1997
(73) Proprietor: Loxley, Ted A., Mentor, OH 44060 (US)
(72) Inventor: LOXLEY, Ted, Albert, Mentor, OH 44060 (US); BLACKMER, John, Frank, Mentor-on-the-Lake, OH 44060 (US); PETERS, Klaus-Markus, Mentor, OH 44060 (US)
(74) Representative: Wain, Christopher Paul
(86) International application number: US9509353
(87) International publication number: WO9600702

(56) References cited:
- EP-A- 0 477 977
- US-A- 3 535 890
- US-A- 3 763 294
- US-A- 3 775 077
- US-A- 3 837 825

## Description

The present application relates to the manufacture of quartz class products having new or improved properties and to novel processes for making such products from porous silica preforms. A preferred embodiment of the invention involves nitrided vitreous quartz products with outstanding physical properties.

It has been known for many years that nitrides of silicon have properties different from silicon dioxide and that some of these properties might be advantageous in certain applications. Silicon nitride and silicon oxynitrides can be produced in various ways as by reaction of silicon and/or silicon dioxide with ammonia, and products of this type would have utility for some special applications.

However, there are many reasons why the commercial use of such products has been very limited, why research relating to nitrided silicon products has not been extensive, and why large capital investment for research and development in this area did not appear to be justified. It is difficult and expensive to produce silicon nitride products or silicon oxynitride products. silicon dioxide (silica) does not react readily with nitrogen, although it is possible with appropriate reaction conditions to produce oxynitrides by reacting particles of silica with anhydrous ammonia.

In the field of microelectronics, scientists have given some consideration to possible uses of silicon oxynitride films because of the unique dielectric properties and other properties. Such films can be produced by chemical vapor deposition or by nitridation of silicon surfaces or thin silicon-dioxide films. Thin silica films made by a sol-gel process can be penetrated by ammonia, perhaps because of the microporosity and cracking of the dried film. At a temperature of 1000°C to 1200°C, anhydrous ammonia can react with the silica film to produce oxynitrides with special properties.

Consideration has also been given to the manufacture of glass or glass-ceramic products from compositions containing silica (SiO₂) and nitrogen (N) as base components as described in Corning Patent No. 4,222,760. However, that patent points out that the practical glass-forming region is quite small in the simple ternary SiO₂-Al₂O₃-N system (Fig. 8) and is essentially non-existent in the simple binary SiO₂-N system.

Silicon oxynitride glasses can be produced by melting a mixture of oxide and nitride powders at a high temperature, such as 1600°C to 1700°C or more. Oxides of aluminum and other metals may be used (i.e., Ca, Li, Mg or Y). The nitrogen source may be Si₃N₄ or AlN, for example. The oxynitride glass is potentially useful in making special plate glass or glass fibers (See U. S. Patent No. 4,609,631).

Oxynitrides have some desirable properties which may be superior to those of quartz glass and may have potential value in the semiconductor industry. However, it appears that such potential, if any, has yet to be realized and that the use of oxynitride glass in connection with the commercial manufacture and processing of silicon-wafers and other semiconductor devices has not been found worthwhile.

To date there has been no practical substitute for quartz glass in the commercial manufacture of silicon semiconductors. The modern glass crucibles used in Czochralski (Cz) crystal-growing furnaces have been formed of silica having a very high purity (i.e., a purity of at least 99.99 percent). Substantial amounts of nitrogen cannot be tolerated in Cz crucibles. For more than two decades the manufacturers of silicon crystal have insisted that the crucibles used in crystal-growing furnaces be transparent and free of significant amounts of nitrogen or cristobalite.

Because of the importance of microelectronics and computers, there is a high demand for ultra-pure silica glass in the manufacture of modern micro-chips. The semiconductor industry is becoming increasingly intolerant with respect to contaminants in quartz glass. In order to meet modern requirements for the processing of semiconductor wafers, a glass should contain at least 99.995 percent by weight of silica. The ultra-pure synthetic fused quartz commonly used for this purpose usually has a purity of about 99.999 percent.

Prior to the present invention, the presence of significant amounts of chemically-bound nitrogen in a quartz glass used in semiconductor manufacture would have been considered highly undesirable. Nitrogen heretofore appeared to be an impurity to be avoided.

The percentage of the nitrogen impurity in a commercial quartz glass is low but is not often measured or reported because of the difficulty of ascertaining the nitrogen content with reasonable accuracy. The analytical detection problem is another good reason why the unusual properties and advantages of chemically-bound nitrogen were heretofore not understood nor appreciated in the glass industry.

For several decades vitreous silica products essentially free of crystalline silica have been used extensively because of exceptional thermal shock resistance and other advantageous physical properties. However, these products have a limited useful life when heated above 1200°C and other disadvantages because of limited resistance to deformation, the devitrification of the glass, and the damage resulting from the crystallographic alpha-beta inversion during heating and cooling of the devitrified glass. There has been a need for a practical solution to these problems for several decades, particularly the devitrification problem, but no simple solution was found prior to the present invention.

There has also been a need to remedy other deficiencies in certain products and processes involving the use of quartz glass or vitreous silica. For example, serious problems have been encountered when attempting to cast elemental silicon in silica molds, making it necessary to tolerate the expense and inefficiency of temporary breakaway casting molds.

In the semiconductor industry, modern epitaxy reactors, diffusion furnaces, CVD equipment and other high-temperature equipment have a great need for effective thermal radiation heat shields. There have been some attempts to meet this need, but they have been crude and generally unsatisfactory.

According to the present invention there is provided a process for making a dense quartz glass article as defined in claim 1. Further features of the invention are defined in the dependent claim.

The present invention relates to the nitriding or nitridation of porous silica preforms and involves new technology which appears to be a giant step forward and a breakthrough of potentially great importance in the field of nitrogen-containing silica or silicon oxynitrides. Incredible improvement in the physical properties of a high-purity quartz glass can be obtained by incorporating a minute amount of chemically-bonded nitrogen in the silica.

Said embodiment is remarkable not only because of the difficulty in forming substantial amounts of chemically-bound nitrogen but also because of the difficulty in measuring or detecting the amounts being formed or in ascertaining any benefits therefrom. The improvement obtained in the resistance of quartz glass to devitrification was quite unexpected.

In accordance with this invention various measures are taken to promote nitridation of silica including the use of ammonia, the incorporation of catalysts, such as calcium, the use of high pressures, and the pretreatment of the silica to provide surface reactive groups, such as hydroxyl or halogen groups. However, it is difficult to incorporate more than a very small amount of such reactive groups in a porous silica preform of the type used to form typical quartz glass products and difficult to incorporate substantial amounts of chemically-bound nitrogen in a quartz glass. It is also impractical to employ extremely expensive equipment to provide the high pressures which are desirable for effective nitriding.

The present invention does not require such expensive equipment. In one embodiment pressure is created within closed pores (or bubbles) of the glass by the surface tension of the glass surrounding the pores.

For example, in carrying out the invention of said first embodiment, a silica preform formed from fused quartz particles by slip casting or other suitable method and having a porosity of 10 to 40 volume percent can be dried, hydroxylated by firing in air containing steam, and then nitrided in anhydrous ammonia at a high temperature, such as 1000°C to 1200°C. The nitrided preform can then be presintered for 1 to 3 hours or more at a temperature of 1400°C to 1500°C to increase the density above 90 percent and to close the pores before the final sintering to a temperature above 1700°C. The chemical bonds between the nitrogen atoms and the silicon atoms tend to be unstable at temperatures above 1500°C, and pressure is created by the nitrogen as a result of that instability. The opposing pressure needed to maintain stability results from the surface tension of the glass as further explained hereinafter.

In carrying out the invention of the first-named embodiment, a shaped silica body or preform with a porosity of 10 to 40 volume percent is formed from a refractory silica composition or a slurry of fine silica particles by slip casting, gel casting, electrophoretic deposition, isostatic pressing, injection molding or other suitable method (see Patents Nos. 3,222,435 and 3,619,440). The porous silica preform is formed and treated in such a manner that, after drying and firing, it contains a substantial amount of chemically-bound hydroxyl groups and/or other suitable surface reactive groups (e.g., at or near the inner surfaces of the pores) which promote nitridation of the silica. These reactive groups are usually hydroxyl or silanol groups rather than halogen groups. The fired porous silica preform is then nitrided in a nitrogen reducing atmosphere (e.g., an atmosphere of anhydrous ammonia maintained at a suitable high temperature from 850°C to 1200°C). To assure that the pores of the preform are filled by the ammonia gas or a mixture of nitrogen gas and hydrogen gas, a substantial vacuum can be employed to remove air or other gas from the pores of the preform before the ammonia or other nitrogen-containing reducing gas is introduced to those pores. Also a pressure differential can be provided to force the ammonia or nitrogen gas through the porous preform.

The final sintering of the preform to a high density, such as 98 to 99 weight percent, can be carried out in an electric induction furnace generally as disclosed in U. S. Patent No. 4,072,489 using a nitrogen atmosphere rather than an atmosphere of helium. The glass is usually heated to at least 1700°C during sintering and is preferably heated to about 1750°C or above the melting point of cristobalite to eliminate crystalline silica.

The porous silica preform can be treated prior to nitridation to obtain improved results. The treatment can include impregnation with a hydrolyzed silicon alkoxide as described hereinafter and can include a hydroxylation treatment to increase the number of hydroxyl groups, silanol groups or other reactive groups which promote nitridation (e.g., chemical bonding of nitrogen to silicon atoms). In a preferred embodiment of the invention, the porous preform is heated in a furnace atmosphere of air or oxygen and steam to a high temperature, such as 400°C to 1100°C, to effect a substantial increase in the hydroxyl content of the glass prior to the nitriding step.

Optionally the porous silica preform can be impregnated with a hydrolyzed silicon alkoxide, such as ethyl silicate (TEOS), dried, and fired before the above-described steam treatment or the nitriding operation.

A number of unique and remarkable products can be produced when practicing the present invention. Nitrided quartz glass products made according to the invention exhibit remarkable physical properties and can be of great commercial value. The nitridation of a porous vitreous silica preform in accordance with the invention apparently causes nitrogen atoms or amine groups to become chemically bonded to surface silicon atoms of the vitreous silica, thereby effecting a remarkable change in the physical properties of the quartz glass even when the nitrogen content is barely measurable (e.g., below 0.005 percent by weight).

The resistance of the quartz glass to devitrification at high temperatures (e.g., 1100°C to 1300°C or higher) and the useful life of the glass under harsh conditions can be drastically improved by nitridation, perhaps more than fifty-fold and possibly two orders of magnitude. At the same time the high-temperature viscosity or resistance of the glass to deformation at high temperatures, such as 1400°C or higher, can be increased dramatically. Because of their remarkable properties, nitrided quartz glass products made according to the invention are valuable for a wide variety of uses in the chemical and electronic arts and other scientific arts and include bell jars, crucibles, tanks, trays, and plates and tiles for furnaces, reactors and hot-wall applications. Such products are particularly useful in the semi-conductor industry and the field of microelectronics because of extreme purity, uniformity and reliability.

The nitrided quartz glass of this invention with a density from 98 to 99.5 percent by weight or more and a silica content of at least about 99.99 percent by weight is remarkably well suited for some special applications. The nitrided glass seems to have unique surface characteristics not possessed by conventional quartz glass. It has been found that the nitrided glass, unlike conventional quartz glass, is suited for use as a permanent shaping mold for casting molten high-purity silicon, thereby eliminating the need for disposable breakaway molds which were heretofore used in molding silicon ingots.

The opaque nitrided quartz glass of this invention is particularly valuable for radiation heat shields used in CVD furnaces for chemical vapor deposition and in epitaxy reactors, diffusion furnaces and other furnaces used in the semi-conductor industry. Such glass is extremely well suited for such uses. In epitaxy reactors, for example, the new high-density heat shields of this invention are so superior to those previously used that the old shields are considered impractical.

The heat shields of the present invention are remarkable in many ways. They normally have a high density from 98 to 99 percent by weight, usually at least 98.4 percent. This minimizes the contamination problem. This invention involves the discovery that small pores of minute or micron size provide optimum resistance to radiation. When the pores have a small diameter, and a large number of pores have a diameter which is close to the wave length of the radiation, the efficiency of the heat shield can be very high.

This invention is remarkable in that it makes possible formation of an almost ideal network of small cells. This is made possible by providing amine groups or nitrogen atoms which are apparently bonded to silicon atoms and which are unstable at the higher sintering temperatures so as to create a vapor pressure adequate to resist the compressive forces due to the surface tension of the glass. The result is white, opaque glass of high density with pores having a minute size. If the density is increased from 98.5 percent to full density in a hipping furnace, the glass can become transparent.

### DEFINITIONS AND TERMINOLOGY

This invention is concerned with fused quartz and quartz glass containing a high percentage of silica as can be produced from quartz sand or from synthetic quartz of even higher purity. Quartz glasses commonly contain 99.5 to 99.99 percent by weight or more of silica and rarely contain more than one percent by weight of other compounds. The term "quartz", as applied to glass, excludes high-silica glasses, such as Vycor, containing 96 percent by weight of silica.

The term "high-purity quartz" as used herein refers to fused silica or quartz glass containing more than 99.99 percent by weight of silica and no more than about 50 parts per million (ppm) of contaminating metallic ions. The term "ultra-pure" as applied to silica or synthetic quartz glass suggests a silica content of at least about 99.998 percent by weight.

The term "refractory" as used herein with respect to a glass or glass composition indicates the ability of the glass to withstand temperatures as high as 1500°C as are encountered in the casting of iron.

The dictionary term "micronized" is used herein with respect to particles which have been ground or pulverized to provide an average particle size no greater than 20 microns.

The term "beta OH value" is used in its normal sense to indicate the hydroxyl content of a quartz glass as measured by infrared spectroscopy.

The term "sintering temperature" is used herein to indicate a temperature of at least 1300°C sufficient to cause the silica of the porous preform to coalesce, to cause the pores of the preform to close, and to obtain a high density.

Unless the context suggests otherwise, the term "vacuum" is used herein to describe a substantial vacuum (i.e., a pressure of no more than 10 torrs). A "high vacuum" is a subatmospheric pressure no greater than about 1 torr (1000 microns).

The term "reactive groups" as used herein with respect to a porous silica body or silica particles refers to hydroxyl- or halogen-containing groups (e.g., surface Si-OH groups) or other reactive or unstable groups which promote nitridation of the silica and chemical bonding of nitrogen atoms or amine groups to some of the silicon atoms when the silica is heated in a suitable nitrogen reducing atmosphere.

As used herein, the term "colloidal silica" refers to extremely small silica particles having an average particle size of from 1 to 100 namometers (i.e., less than 0.1 micron).

The term "ultrapure" as applied to natural or synthetic silica indicates that the metallic impurities other than aluminum do not exceed 4 parts per million (ppm). An "extremely pure" silica contains up to 15 ppm of aluminum and a total of no more than 8 ppm of other metallic ions.

The term "high-porosity" as applied to a silica preform relates to the total volume of the pores or internal cavities rather than the width or diameter of the pores and suggests a porosity of from 25 to 30 volume percent or greater.

The term "transparent" as applied to sintered quartz glass is used in the normal sense to define clear full-density glass and does not require glass approaching optical grade. The term covers typical helium-sintered glass.

It will be understood that, unless the context suggests otherwise, parts and percentages are by weight rather than by volume.

The present invention is particularly concerned with the manufacture of high-purity vitreous silica or quartz glass products from refractory silica compositions which are molded and sintered to density the glass. The methods and apparatus used in the practice of the invention may be similar to those described in U. S. Patents Nos. 4,072,489 and 5,053,359.

The invention involves formation of a shaped porous silica body or preform from a refractory composition or a slurry of fine silica particles by slip casting (See Patent No. 4,072,489) , by hot isostatic pressing, by electrophoretic deposition, by injection molding (See Patent No. 3,222,435) or by other suitable methods (See Patent No. 3,619,440). A gel-casting process can also be employed.

High-purity silica or fused quartz may be pulverized, micronized or reduced to appropriate micron size as described in Patent No. 4,072,489 while maintaining the desired purity. A slurry or slip containing micronized particles of high-purity silica is preferably prepared by wet milling in a conventional ball mill having balls or stones formed of essentially pure fused quartz. The liquid employed during milling is preferably distilled water rather than an organic liquid. After milling, the average particle size of the silica particles is from 2 to 10 microns.

In the practice of the invention, it is usually preferable to employ high-purity silica or fused quartz with a silica content of 99.99 percent or higher. Natural or synthetic fused quartz with a reported silica content of at least 99.999 percent by weight is available commercially. Such ultra-pure silica can be produced by hydrolysis of silicon tetrachloride or tetraethyl orthosilicate (TEOS). Extremely pure silica can also be produced from high-purity quartz sand that has been treated to remove impurities.

A preferred embodiment of the present invention relates to the manufacture of high-purity nitrided silica glass products. In this embodiment a silica body or preform with a substantial porosity is formed or molded to the desired shape, dried, fired in air or oxygen, and then nitrided in a nitrogen-containing reducing atmosphere to cause bonding of nitrogen atoms to silicon atoms of the silica (e.g., Si-NH₂). The nitridation of the silica preform can be carried out prior to or during sintering of the preform.

The silica of the preform is preferably a vitreous quartz of high purity and may have a purity in excess of 99.99 percent by weight. If the silica preform is formed by gel casting as in the embodiment of the invention previously described, a substantial portion of the silica will be formed from hydrolyzed ethyl silicate. Before the silica preform is sintered to high density, it can be fired for 2 to 10 hours in air at a temperature of from 800°C to 1250°C to oxidize the hydrocarbons or other combustibles. A normal firing might be for about 3 to about 4 hours at a temperature of from 1050°C to 1200°C.

When making nitrided quartz glass products according to this invention, the porous silica preform is provided with surface reactive groups, such as hydroxyl or halogen groups, which are unstable in the presence of ammonia and promote the nitridation of the silica at high temperatures. The amount of the hydroxyl groups or other reactive groups can be substantial, (i.e., at least 100 parts per million, ppm). That amount can be from 150 to 250 ppm or more.

In order to provide the desired hydroxyl content, the porous silica preform can be hydroxylated with steam at a high temperature, such as 400°C to 1100°C or more. The steam treatment increases the hydroxyl content at least about 30 percent and preferably at least about 50 percent. The treatment can be carried out before or during the firing of the preform in air or oxygen by having an appropriate amount of steam present during oxidation of the combustibles. If oxidation is effected in an atmosphere of oxygen and steam, the firing temperature could be as low as 500°C. The conditions during hydroxylation of the silica preform should be selected to obtain the desired hydroxyl content prior to the nitriding step.

When the hydroxylated silica preform is nitrided under suitable conditions in a nitrogen-containing atmosphere, there is a reduction in the hydroxyl content and a commensurate increase in the amount of chemically-bound nitrogen. That amount should be an effective amount, no less than 25 ppm, and is preferably at least about 50 ppm. The nitridation can be carried out in such manner that the hydroxyl content is reduced 50 to 70 percent or more. The nitriding step can reduce the hydroxyl content of the quartz glass product to a low value, such as 10 to 20 ppm.

A dramatic improvement in the physical properties of high-purity sintered quartz glass can be achieved with a minute amount of chemically-bound nitrogen. The minimum amount depends on the intended use for the quartz glass product.

When the desired minimum nitrogen content in the glass product is 100 ppm or more, an adequate amount of hydroxyl groups or other reactive groups should be provided in the porous silica preform. For example, hydroxylation of the preform may be desirable to provide an hydroxyl content of 150 to 200 ppm or more prior to nitriding. After nitriding the preform and sintering to almost full density, the infrared beta OH value may be very low.

Nitridation of the porous silica preform is more effective when using a strong reducing agent, such as anhydrous ammonia, to provide a hydrogen-nitrogen reducing atmosphere. It is also possible to use other reducing agents, such as hydrazine. An atmosphere suitable for effective nitridation can be obtained from cracked ammonia. A reducing atmosphere consisting of a corresponding mixture of nitrogen gas and hydrogen gas is less effective and may require more time to achieve the desired result. In carrying out the process of the present invention, the nitriding in the hydrogen-nitrogen reducing atmosphere is carried out at a temperature of from 600°C to 1300°C, preferably from about 900°C to about 1100°C.

The partial replacement of surface hydroxyl groups with chlorine by a pretreatment step may enhance the nitriding reaction.

Useful nitrided quartz glass products can be made according to this invention when using various nitrogen-containing reducing atmospheres during the nitriding step. If the reducing atmosphere is obtained from cracked ammonia, nitriding can, for example, be carried out for 30 minutes to an hour or more at a temperature of from about 900°C to about 1100°C. If the reducing atmosphere consists of a mixture of nitrogen gas and a reducing gas, such as hydrogen, methane or carbon monoxide, nitriding could be carried out for 1 to 2 hours or more at a temperature of from 1000°C to 1200°C or more.

After the silica preform has been nitrided to provide the desired nitrogen-silicon bonding and the desired content of chemically-bound nitrogen, it is sintered to a high density, such as 98 to 99 percent. The final sintering may be effected in a conventional electric induction furnace at high temperatures, such as 1550°C to 1750°C. Since the silicon-nitrogen bonds are unstable at temperatures above 1500°C, it is desirable to carry out the final sintering operation in a nitrogen reducing atmosphere. However, if the sintering is carried out in two stages and the pores of the preform are closed, the final sintering can be carried out in helium or argon or other inert gas.

Nitrided quartz glass products made according to the present invention have remarkable physical properties even when the amount of chemically-bound nitrogen in the glass is very small. For example, the viscosity of quartz glass at 1260°C can often be increased 50 percent or more by a nitriding treatment which provides the glass with a nitrogen content of less than 0.02 percent by weight. The same nitriding treatment may at the same time provide the quartz glass with an incredible increase in the resistance to devitrification.

A proper basis for comparison can be provided by slip casting two identical silica preforms from the same slurry (e.g., the slurry of Example I). One porous preform is dried, fired in air for about 3 hours at 1150°C to oxidize the combustibles, and then sintered in helium in a semi-automatic induction furnace as described in Patent No. 4,072,489. If the other identical preform is dried and fired in essentially the same way but subjected to a nitriding treatment in ammonia at 1100°C (as in Example I) and then sintered in nitrogen to almost full density in the same induction furnace in essentially the same way, the improvement in the physical properties can be almost unbelievable.

While superior results can be obtained by sintering in two stages or by using two or more furnaces, it will be understood that some advantages of the invention can be obtained using a single electric induction furnace of the type disclosed in Patent No. 4,072,489 in which nitriding is effected in a reducing atmosphere consisting of nitrogen gas and a reducing gas, such as hydrogen, methane or carbon monoxide, and at a relatively high temperature, such as 1400°C to 1600°C or higher, in a short period of time, such as 10 to 30 minutes. After nitriding the sintered preform may be further heated to a temperature above 1700°C to provide a high density, such as 98 to 99 percent by weight, and/or to eliminate cristobalite.

While the porous preform is nitrided and sintered in the induction furnace at a temperature above 1400°C, pressurized nitrogen gas can be caused to flow through the preform as by use of a perforated or porous graphite support, such as the graphite mandrel (16) described hereinafter in Example I. The porous graphite support used during sintering of a glass crucible could, of course, be concave or convex.

When making simple articles, such as quartz glass receptacles, slip casting is usually employed to form the porous preform prior to nitriding. When conventional plaster of Paris molds are used for slip casting, the calcium ions introduced into the preform serve as a catalyst to promote nitriding. It will be understood, however, that the presence of calcium ions is not essential and that the preform need not be formed by slip casting.

The methods and procedures described and the unique refractory compositions advocated in the examples of this specification or set forth as preferred embodiments are merely illustrative and are not intended to limit the scope of the invention. They are practicable and should be appropriate and useful in attaining the major or important advantages of the invention.

### EXAMPLE I

A high-purity fused quartz slurry is prepared by wet milling high-purity fused quartz (99.99% SiO₂) using ultra-pure deionized water and a high-purity fused quartz grinding media in a conventional ball mill. The silica particles are milled for about 24 to 36 hours to provide a slip or slurry with a pH of from 2 to 4, an average particle size of from about 5 to about 7 microns, and a solids content of from about 82 to 84 percent by weight. The pH of the slurry is adjusted to about 7.5 by adding some dilute ammonium hydroxide, and the slurry is mixed for an extended period of time to break up floccules or agglomerates.

In the making of a quartz glass receptacle in accordance with this invention, the above slurry can be employed for slip casting a cup-shaped silica body or preform in a conventional plaster of Paris mold using conventional drain-casting procedures similar to those described in U. S. Patent Nos. 3,972,704 and 4,072,489. The slip-cast preform is air dried for about 24 hours in a warm drying room maintained at a temperature somewhat above 40°C and then placed in an electric furnace and gradually heated to about 800°C in an atmosphere of air and superheated steam. The preform is maintained at about 800°C in such atmosphere for about 2 hours and then heated to about 1200°C in such atmosphere for an additional 2 hours to assure complete oxidation of the hydrocarbons or combustibles. The amount of vaporized water or steam is adequate to provide the desired vapor pressure and to maintain the desired hydroxyl content in the preform.

After such firing the preform has a porosity of from 15 to 20 volume percent and should have adequate strength for handling. Except for a high hydroxyl content, the porous silica preform is conventional. The wall thickness is substantially uniform and may be from 5 to 7 millimeters, for example, in a cup-shaped receptacle with a diameter of 25 to 30 centimeters.

The preform is then placed in an electrically-heated vacuum furnace and a substantial vacuum is applied for about 15 minutes to remove air and steam from the internal pores. The pressure is preferably reduced below 2 torrs. The vacuum is then discontinued and anhydrous ammonia is admitted to the furnace and caused to fill said pores. The preform is then heated in the ammonia (nitrogen-hydrogen) reducing atmosphere for about 30 to 35 minutes at a temperature of about 1100°C to cause nitridation at the inner surfaces of the pores.

Thereafter, the porous nitrided silica preform is cooled enough to permit handling and is mounted upside-down on the heated hollow graphite mandrel (16) of a semi-automatic electric induction furnace of the type disclosed in said Patent No. 4,072,489. The preform is shaped to fit the mandrel. The sintering procedure may be similar to that disclosed in that patent, but the glass is sintered in a nitrogen reducing atmosphere rather than in helium. The mandrel is perforated and internally pressurized with nitrogen to cause the nitrogen to flow radially outwardly through the mandrel and the porous preform. Just before the preform enters the furnace chamber, the temperature of the mandrel and the furnace may be around 1300°C to 1500°C. The mandrel and the porous preform are advanced into the furnace chamber to start the sintering cycle, and the furnace is heated at a rapid rate to increase the glass temperature from below 1400°C to above 1600°C and gradually to more than 1700°C to cause the silica particles to coalesce and the glass to reach a high density.

The glass is preferably heated to about 1750°C to assure that no cristobalite remains in the glass. When the glass reaches that temperature, as indicated by a pyrometer, the mandrel and the sintered receptacle are retracted out of the furnace and cooled to permit removal of the receptacle. The total time for the sintering operation in the induction furnace can be relatively short to minimize cristobalite formation and depends on the thickness of the glass and also the initial temperature of the mandrel. It may take from 8 to 12 minutes to provide the desired sintering.

A non-oxidizing atmosphere of nitrogen gas is provided in the induction furnace during the sintering operation which tends to avoid undesired decomposition reactions at the surfaces of the internal pores of the silica body which may occur at high temperature due to the instability of the silicon-nitrogen bonds. Such bonds are more stable in the presence of a nitrogen atmosphere or a nitrogen-hydrogen reducing atmosphere.

Sintering of the glass in nitrogen as described above produces a white, opaque quartz glass with a substantially uniform cellular structure. The sintered quartz glass receptacle can have a density in excess of 98.5 percent by weight and pores of minute size.

The procedure described above can be modified in various ways. The ammonia atmosphere employed for nitridation of the preform can be replaced by a similar reducing atmosphere consisting of a mixture of nitrogen and hydrogen or carbon monoxide. A similar nitrogen-hydrogen mixture can also be used in the induction furnace during the final sintering operation.

The quartz glass receptacle produced by the procedure of this Example I has remarkable properties which one would not expect in view of the small amount of chemically-combined nitrogen actually present in the glass structure. The nitriding of the quartz glass effects a great increase in the viscosity of the glass at high temperatures above 1400°C and an incredible increase in the resistance of the glass to devitrification.

Although the glass has a density of 98.5 percent or more, it provides exceptional resistance to radiation heat transfer because of the uniform network of minute pores. Such a glass has potentially great commercial value with respect to radiation heat shields, particularly for furnaces used in the semi-conductor industry.

It will be understood that variations and modifications of the compositions, methods, devices and products disclosed herein may be made without departing from the spirit of the invention.

## Claims

1. A process for making a dense quartz glass article from a fired preform comprising forming a shaped porous silica body from an aqueous slurry consisting essentially of water and fine particles of high-purity silica having an average particle size of from 2 to 10 microns, drying the silica body, firing the body at a temperature of at least 1000°C, cooling the porous preform, and thereafter placing it in a furnace and sintering it for a short period of time by heating it to a temperature above 1600°C to coalesce the silica particles and form a dense quartz glass without forming substantial amounts of cristobalite, the glass article being heated in the furnace briefly to a temperature above 1700°C, characterized in that the fired preform is provided with hydroxyl groups that promote nitridation of the silica at the internal pore surfaces, in that the fired preform is heated in a nitrogen-containing reducing atmosphere in such manner as to provide the quartz glass with an amount of chemically-combined nitrogen no less than 25 ppm and less than 200 ppm that provides the glass with resistance to devitrification, and in that the preform is sintered while supported on a shaped support that directs nitrogen gas through the preform while preventing distortion of the glass.

2. A process according to claim 1 characterized in that the fired preform is nitrided and sintered to high density in the furnace while mounted on the shaped support.

3. A process according to claim 1 or claim 2 characterized in that the fired preform is heated for about 8 to about 12 minutes in the furnace to provide the glass with at least 50 ppm of chemically-combined nitrogen and in that the nitrided quartz glass article is heated to about 1750°C before being removed from the furnace.

4. A process according to any of the preceding claims characterized in that the porous silica body is hydroxylated by firing in an atmosphere containing oxygen and steam at a temperature of at least 500° C to increase the hydroxyl content of the fired preform at least 30 percent to at least 150 ppm before the preform is nitrided.

5. A process according to any of the preceding claims wherein the final preform is a receptacle formed by slip casting and is provided with a substantial amount of calcium to promote the nitriding reaction.

6. A process according to any of the preceding claims characterized in that the fired preform is sintered to provide a white quartz glass containing a multitude of microscopic pores and at least 50 ppm of chemically-combined nitrogen and having a density of at least 98 percent by weight.

## Patentansprüche

1. Verfahren zur Herstellung eines Gegenstandes aus dichtem Quarzglas aus einer gebrannten Vorform, umfassend Bilden eines geformten porösen Siliciumdioxid-Körpers aus einer wäßrigen Aufschlämmung, die im wesentlichen aus Wasser und feinen Teilchen hochreinen Siliciumdioxids mit einer durchschnittlichen Teilchengröße von 2 bis 10 um besteht, Trocknen des Siliciumdioxid-Körpers, Brennen des Körpers bei einer Temperatur von mindestens 1000°C, Abkühlen der porösen Vorform und danach Einführen dieser in einen Ofen und deren kurzzeitiges Sintern durch Erhitzen auf eine Temperatur oberhalb 1600°C zum Verschmelzen der Siliciumdioxid-Teilchen und Bilden eines dichten Quarzglases ohne Bildung von wesentlichen Mengen an Cristobalit, wobei der Glasgegenstand in dem Ofen kurz auf eine Temperatur oberhalb 1700°C erhitzt wird,
dadurch **gekennzeichnet**, daß
die gebrannte Vorform mit Hydroxyl-Gruppen versehen ist, welche die Nitrierung des Siliciumdioxids an den inneren Porenoberflächen beschleunigen, die gebrannte Vorform in einer Stickstoff-haltigen reduzierenden Atmosphäre auf solche Weise erhitzt wird, daß das Quarzglas mit einer Menge an chemisch gebundenem Stickstoff von mindestens 25 ppm und weniger als 200 ppm versehen wird, wodurch das Glas entglasungsbeständig wird, und die Vorform gesintert wird, während sie sich auf einem geformten Träger befindet, der Stickstoffgas durch die Vorform führt und dabei die Verformung des Glases verhindert.

2. Verfahren nach Anspruch 1,
dadurch **gekennzeichnet**, daß
die gebrannte Vorform in dem Ofen nitriert und auf hohe Dichte gesintert wird, während sie sich auf dem geformten Träger montiert befindet.

3. Verfahren nach Anspruch 1 oder 2,
dadurch **gekennzeichnet**, daß
die gebrannte Vorform etwa 8 bis etwa 12 min in dem Ofen erhitzt wird, so daß das Glas mit mindestens 50 ppm chemisch gebundenem Stickstoff versehen wird, und der Gegenstand aus nitriertem Quarzglas vor dem Entfernen aus dem Ofen auf etwa 1750°C erhitzt wird.

4. Verfahren nach einem der vorhergehenden Ansprüche,
dadurch **gekennzeichnet**, daß
der poröse Siliciumdioxid-Körper durch Brennen in einer Sauerstoff und Dampf enthaltenden Atmosphäre bei einer Temperatur von mindestens 500°C hydroxyliert wird, um den Hydroxyl-Gehalt der gebrannten Vorform um mindestens 30 % auf mindestens 150 ppm vor dem Nitrieren der Vorform zu erhöhen.

5. Verfahren nach einem der vorhergehenden Ansprüche,
wobei die endgültige Vorform ein durch Schlickergießen gebildetes Aufnahmegefäß und mit einer wesentlichen Menge an Calcium zur Beschleunigung der Nitrierungs-Reaktion versehen ist.

6. Verfahren nach einem der vorhergehenden Ansprüche,
dadurch **gekennzeichnet**, daß
die gebrannte Vorform gesintert wird, um ein weißes Quarzglas zu ergeben, das eine Vielzahl an mikroskopischen Poren und mindestens 50 ppm chemisch gebundenen Stickstoff enthält und eine Dichte von mindestens 98 Gew.-% hat.

## Revendications

1. Procédé pour la fabrication d'un article en verre de quartz dense à partir d'une ébauche cuite comprenant la formation d'un corps de silice poreux façonné à partir d'une suspension aqueuse constituée essentiellement d'eau et de fines particules de silice de pureté élevée ayant une taille moyenne de particules de 2 à 10 microns, le séchage du corps de silice, la cuisson du corps à une température d'au moins 1 000°C, le refroidissement de l'ébauche poreuse et le placement subséquent de celle-ci dans un four et le frittage de celle-ci sur une courte durée en la chauffant à une température supérieure à 1 600°C pour faire coalescer les particules de silice et former un verre de quartz dense sans former des quantités substantielles de cristobalite, l'article en verre étant chauffé dans le four brièvement à une température supérieure à 1 700°C, caractérisé en ce que l'ébauche cuite est munie de groupes hydroxyle qui favorisent la nitruration de la silice sur les surfaces internes des pores, en ce que l'ébauche cuite est chauffée dans une atmosphère réductrice contenant de l'azote de manière à fournir le verre de quartz avec une quantité d'azote chimiquement liée d'au moins 25 ppm et inférieure à 200 ppm qui fournit le verre avec une résistance à la dévitrification et en ce que l'ébauche est frittée tout en étant supportée sur un support façonné qui dirige l'azote gazeux à travers l'ébauche tout en évitant la déformation du verre.

2. Procédé selon la revendication 1 caractérisé en ce que l'ébauche cuite est nitrurée et frittée à une densité élevée dans le four tout en étant fixée sur le support façonné.

3. Procédé selon la revendication 1 ou la revendication 2 caractérisé en ce que l'ébauche cuite est chauffée pendant d'environ 8 à 12 minutes dans le four pour fournir le verre avec au moins 50 ppm d'azote chimiquement lié et en ce que l'article en verre de quartz nitruré est chauffé à environ 1 750°C avant d'être retiré du four.

4. Procédé selon l'une quelconque des revendications précédentes caractérisé en ce que le corps de silice poreuse est hydrolysé par cuisson dans une atmosphère contenant de l'oxygène et de la vapeur à une température d'au moins 500°C pour augmenter la teneur en groupe hydroxyle de l'ébauche cuite d'au moins 30 pourcent jusqu'au moins 150 ppm avant que l'ébauche soit nitrurée.

5. Procédé selon l'une quelconque des revendications précédentes dans lequel l'ébauche finale est un récipient formé par coulée en barbotine et est munie d'une quantité substantielle de calcium pour promouvoir la réaction de nitruration.

6. Procédé selon l'une quelconque des revendications précédentes caractérisé en ce que l'ébauche cuite est frittée pour fournir un verre de quartz blanc contenant une multitude de pores microscopiques et au moins 50 ppm d'azote chimiquement lié et présentant une densité d'au moins 98 pourcent en poids.
